Europäisches Patentamt

(19)　European Patent Office

Office européen des brevets

(11)　EP 0 947 467 A1

## (12) EUROPEAN PATENT APPLICATION
published in accordance with Art. 158(3) EPC

(43) Date of publication:
06.10.1999 Bulletin 1999/40

(21) Application number: 97944124.3

(22) Date of filing: 15.10.1997

(51) Int. Cl.$^6$: **C01B 33/12**, B01J 20/02, B01J 35/10, G01N 30/48, C04B 38/00, C04B 41/85

(86) International application number:
PCT/JP97/03719

(87) International publication number:
WO 98/16467 (23.04.1998 Gazette 1998/16)

(84) Designated Contracting States:
DE FR GB IT

(30) Priority: 16.10.1996 JP 27322196
08.08.1997 JP 21528997

(71) Applicant:
Asahi Kasei Kogyo Kabushiki Kaisha
Osaka 530 (JP)

(72) Inventors:
• TAKEDA, Kunihiko
Shinagawa-ku, Tokyo 141 (JP)
• OKUYAMA, Kazuo
Yokohama-shi, Kanagawa 220 (JP)

(74) Representative:
Strehl Schübel-Hopf & Partner
Maximilianstrasse 54
80538 München (DE)

(54) **POROUS INORGANIC COMPOSITE AND METHOD FOR SEPARATING METAL ELEMENTS USING THE SAME**

(57)　A porous inorganic composite comprising a porous inorganic particulate material having an average particle size of 1 μm to 1 mm, a porosity of 0.20 to 0.90 and an average pore size of 10 to 5,000 nm and an inorganic substance carried on the particulate material.

EP 0 947 467 A1

## Description

### TECHNICAL FIELD

The present invention relates to a novel porous inorganic composite comprising a porous inorganic particulate material and an inorganic substance, a process for producing the same and a method for separating a metal element using the porous inorganic composite.

### PRIOR ART

Ion exchange resins, chelate resins, inorganic ion exchangers, etc. are widely used in the separation step or adsorption step of adsorption chromatography, ion exchange chromatography, partition chromatography, etc.

However, ion exchange resins and chelate resins are not satisfactory in respect to physical strength, particle dimensional stability, etc., and inorganic ion exchangers are also not satisfactory in respect to particle shape, available adsorption capacity, etc. Thus, there are strict restrictions to the height, particle packing density, development pressure, etc. of packed columns using these resins or exchangers.

On the other hand, as for ion exchange resins and chelate resins, those composites free from the above-mentioned problems have been provided by coating the exterior surfaces of non-porous or porous inorganic materials or the pore interior surfaces of porous inorganic materials with ion exchange resins or by bonding the ion exchange resins to the surfaces by reduction, in order to utilize the physical strength of inorganic structure. Examples of such composites are disclosed in, JP-B-52('77)-48518 as to the use of coating and in JP-A-52-146298 as to the use of reactive bonding. However, these composites still have some inconvenience in that the volume of resin coating, is considerably small as compared with the volume of composite and thus not satisfactory for providing larger adsorption and separation capacities. To overcome such an inconvenience, JP-A-62-83037 proposes a composite of inorganic porous particulate material in which the interior surfaces of the pores are partially or completely dominated by the resin, and the composite has spaces communicating between the exterior of the inorganic porous particulate material and inside the pores with the dominating resin.

As to the inorganic ion exchanger, however, it is the currently accepted practice to crush or granulate the exchanger and directly fill the crushed or granulated particles into a column without using carriers. In most cases, such an inorganic exchanger has particles with indefinite shapes and a broad size distribution, and is also inconvenient, because of its fine particulate state, in that the particles disintegrate during the use and lead to an increase in development pressure or a difficulty in packing into the column. Furthermore, out of the total volume of inorganic ion exchanger, only the portions proximate to the surface area are utilized for adsorption, and thus the inorganic ion exchanger has further inconvenience in that the adsorption capacity is small in relative to the volume of inorganic ion exchanger employed.

Lithium is now regarded as an important battery material, and about one half of the proved reserves exists as brine. For an efficient lithium production, it is essential to separate lithium efficiently from other metal elements. Heretofore, crushed particles of such inorganic ion exchangers as mentioned above have been used for the separation, but there are still problems such as a low utilization efficiency of ion exchanger, etc. Efficient separation materials have been long desired.

Recently, a lithium-recovering agent, which comprises a heat and acid-resistant inorganic porous material, such as a disc-shaped cordierite ceramics, etc. and a metal oxide converted from a composite oxide comprising lithium and one metal element selected from manganese, antimony, titanium, etc. by replacing the lithium with hydrogen, wherein the metal oxide being supported by the inorganic porous material as a carrier, has been reported (JP-B-6('94)-26662). In the metal oxide, antimonic acid forms a composite oxide with lithium, while maintaining an orthorhombic crystal system. By replacing the lithium with hydrogen in the composite oxide using an acid, an adsorbability toward lithium is given thereto. A $\lambda$-MnO$_2$-carrying porous ceramic composite using commercially available silica gel or porous glass is disclosed (J. Ceramic Soci. Japan, 100,767, 1992).

For the inorganic porous materials for use as a chromatographic carrier, a catalyst carrier, etc., it has been so far regarded as an advantage if their micropores are uniform (in the present invention the term "micropore" means a pore having a pore size of not less than 1,000 Å), and materials having a much higher porosity have been desired. Inorganic porous materials for the above-mentioned uses, when composed of crushed type particles or deformed type particles, undergo disintegration of particle edges during handling and the generated fine powders are liable to cause clogging or increased pressure drop, or to make the packed state unstable. Thus, spherical particles are much advantageous.

As an inorganic porous particulate material, silica gel or porous glass has been used as a carrier for the above-mentioned $\lambda$-MnO$_2$-carrying porous ceramic composite. Silica gel can be usually prepared by forming silica hydrogel through reaction of sodium silicate with sulfuric acid or hydrochloric acid, followed by washing with water and drying, and further, if necessary, by firing. Thus prepared silica gel has a spherical shape, but has a broad pore-size distribution or pore sizes as small as a few hundred Å, and furthermore has a silica shell, on the surface, which acts as a barrier to material transfer inside particle. Furthermore, its skeleton shape is in an agglomeration structure of several fine silica particles (particulate state) and results in a relatively low strength. Its silica content is about 98% by weight. The process for preparing silica gel is disclosed, for example, in JP-A-58-104017 and JP-A-7-5817.

Porous glass can be prepared by melting borosilicate glass of specific composition, followed by shaping and heat treatment in a predetermined temperature range to effect phase separation, then conducting acid treatment and washing with water to remove the dissolved phase, and drying. Thus prepared porous glass has a skeleton in an entangled column-structure (columnar state), typically contains 96% silica acid anhydride, boric acid anhydride and sodium oxide as other constituents, and is thus limited in its resistance to chemicals such as acids, etc., and its porosity is usually low. Furthermore, since porous glass is melted at high temperatures, it requires crushing to obtain powders and results in the crushed type particles. A process for preparing porous glass is disclosed, for example, in US-A-2,106,744 (1934) or US-A-4,657,875 (1987).

DISCLOSURE OF THE INVENTION

An object of the present invention is to provide a porous inorganic composite having high capacities in ion exchangeability, catalyst activity and hydrogen storability with distinguished efficiencies and also having practically distinguished operability and mechanical strength.

Another object of the present invention is to provide a method for separation (of metal elements) at a high separation efficiency.

Other object of the present invention is to provide a porous inorganic composite particularly suitable for separation and purification of lithium element and a method for separating lithium element using the same.

As a result of extensive studies to solve the above-mentioned problems, the present inventors have established the present invention.

That is, the present invention includes the followings:

(1) A porous inorganic composite which comprises a porous inorganic particulate material having an average particle size of 1 μm to 1 mm, a porosity of 0.20 to 0.90 and an average pore size of 10 to 5,000 nm and an inorganic substance carried on the particulate material.

(2) A porous inorganic composite which comprises a porous inorganic particulate material having a skeleton in an entangled columnar structure, an average particle size of 1 μm to 1 mm, a porosity of 0.60 to 0.90 and an average pore size of 500 to 2,000 nm and an inorganic substance carried on the particulate material.

(3) A porous inorganic composite as described in the foregoing (1) or (2), wherein the inorganic substance is a metal oxide.

(4) A porous inorganic composite as described in the foregoing (3), wherein the metal oxide is antimony oxide.

(5) A porous inorganic composite as described in the foregoing (3), wherein the metal oxide is manganese oxide.

(6) A method for separating a metal element which comprises contacting a solution containing a plurality of metal elements with a solid adsorbent, thereby adsorbing at least a portion of other metal elements than one metal element onto the solid adsorbent, and separating at least a portion of the other metal elements than the one metal element from the solution, wherein the porous inorganic composites as described in any one of the foregoing (1) to (4) is used as the solid adsorbent.

(7) A method for separating a metal element which comprises contacting a solution containing a metal element with a solid adsorbent, thereby adsorbing the metal element onto the solid adsorbent and separating the metal element from the solution, wherein the porous inorganic composite as described in any one of the foregoing (1) to (3) and (5) is used as the solid adsorbent.

(8) A method for separating a metal element as described in the foregoing (6) or (7), wherein the metal element is lithium.

BRIEF DESCRIPTION OF THE DRAWINGS

Fig. 1 is an overall view showing one example of an apparatus for use in the preparation of the present porous particulate material.

Fig. 2 is an enlarged view of particle formation section in the example of the apparatus for use in the preparation of the present porous inorganic particulate material.

Fig. 3 is a graph showing results of measurement in pressure change test in Example 2 of the present invention (marks ■) and Comparative Example 2 (marks ●).

Fig. 4 is a picture showing the skeleton of porous inorganic particulate material in an entangled columnar structure.

Fig. 5 is a picture showing the skeleton of porous inorganic particulate material in a particulate structure.

BEST MODE FOR CARRYING OUT THE INVENTION

The present porous inorganic composite is prepared by providing a specific porous inorganic particulate material with an inorganic substance and substantially fixing the inorganic substance onto pore surfaces of the porous inorganic particulate material as a carrier by some means, whereby the drawbacks of conventional functional inorganic substance, such as inorganic ion exchangers, inorganic catalysts, hydrogen occlusion alloys, etc. can be overcome.

Porous inorganic particulate material for use as a carrier in the present porous inorganic composite has an average particle size of 1 $\mu$m to 1 mm, preferably 20 $\mu$m to 500 $\mu$m. The porous inorganic particulate material having an average particle size of 1 $\mu$m or more can be more readily handled, and, when used by packing in the column, can lower the pressure loss before and after the column. When the average particle size is not more than 1 mm, the time required for diffusion in the pores of the porous inorganic composite can be made shorter, while maintaining satisfactory functions of inorganic substance, for example, ion exchange function, catalytic function and hydrogen-occlusion function.

Porosity $\alpha$ (ratio of pore volume to total volume of porous inorganic particulate material) of porous inorganic particulate material is in a relation of $0.20 \leq \alpha \leq 0.90$, preferably $0.6 \leq \alpha \leq 0.90$, more preferably $0.65 \leq \alpha \leq 0.90$ from the viewpoints of both mechanical strength and adsorption efficiency. The higher the porosity, the more inorganic substance can be supported, leading to the higher capacity of an inorganic composite, for example the higher adsorption capacity, higher proportion of catalytically active centers, higher occluding capacity, etc.

Two inorganic composites resulting from carrying manganese dioxide onto porous inorganic silica particulate materials having (i) a porosity of 0.50 and (ii) a porosity of 0.80, respectively, are quantitatively compared with each other, supporting that a pore volume of 0.25 ml per ml of the inorganic composite is to be obtained. The silica volume will be 0.50 ml, the manganese dioxide volume 0.25 ml and the pore volume 0.25 ml, and the amounts of manganese dioxide per volume and weight of the inorganic composite will be 1.25 g/ml and 0.53 g/g, respectively, in the case of (i) (on the basis that the specific gravity of silica is 2.2 and that of manganese dioxide 5.0; this basis will be the same for calculation in the case of (ii)). On the other hand, in the case of (ii), silica amounts to 0.20 ml, manganese to 0.55 ml and the pore volume to 0.25 ml, and the amounts of manganese oxide per volume and weight of the inorganic composite will be 2.75 g/ml and 0.86 g/g, respectively. It can be seen from the foregoing that the porosity of (ii) is only 1.6 times as large as that of (i), but the amount of manganese dioxide per volume of the inorganic composite of (ii) is 2.2 times as large as that of (i). As high a porosity as the mechanical strength permits is preferable for assuring the mass diffusion rate within the porous inorganic particulate material.

The porous inorganic particulate material has an average pore size of 10 to 2,000 nm, preferably 500 to 2,000 nm, more preferably 800 to 2,000 nm. So long as the mean pore size is not less than 10 nm, routes for allowing a reactant substance to the inorganic substance present in the pores of the porous inorganic particulate material can be readily obtained, resulting in good adsorption and desorption efficiencies to attain satisfactory separation in a shorter time. If the average pore size is not more than 2,000 nm, satisfactory mechanical strength of the porous inorganic particulate material can be maintained.

Porous inorganic particulate material for use as a carrier in the present invention includes, for example, well known porous ceramic particulate materials, specifically porous inorganic particulate materials of silica, alumina, silica-alumina, titania, zirconia and mixtures of at least two thereof, among which the silica particulate material is preferable from the viewpoints of easy preparation of substantially spherical shape, narrow particle size distribution and high acid resistance of silica.

Generally, the skeleton structure of porous particulate material includes an entangled columnar structure and a particulate structure.

The porous inorganic particulate material for use as a carrier in the present invention has preferably a skeleton in an entangled columnar structure.

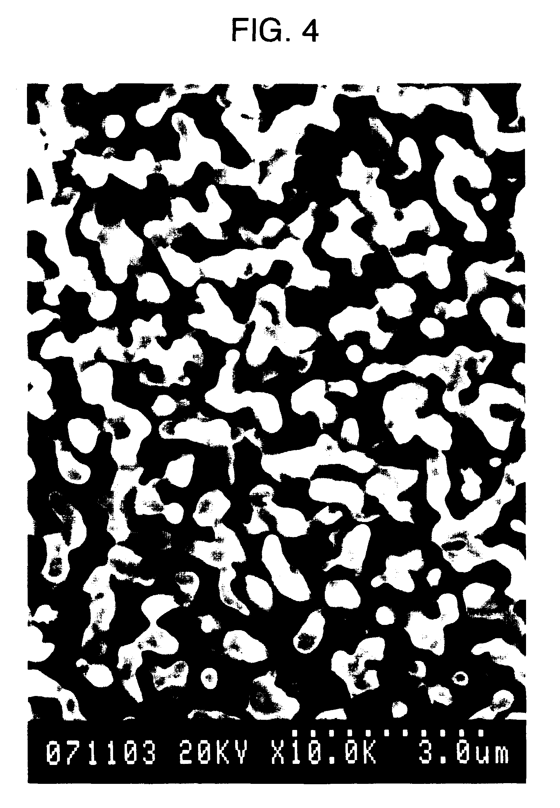

The skeleton structure of the ordinary porous silica particulate material is a particulate structure, but by making the porous inorganic particulate material have an entangled columnar structure, the resulting porous inorganic particulate material can have a practically satisfactory strength even with a high porosity. The entangled columnar structure is a structure with three-dimensionally developed columnar silica with substantially the same diameter, as shown in Fig. 4, for example. Such a structure has no or less, if any, stress-concentrated, weak parts at specific positions, and thus it seems that the strength inherent to the silica can be shown.

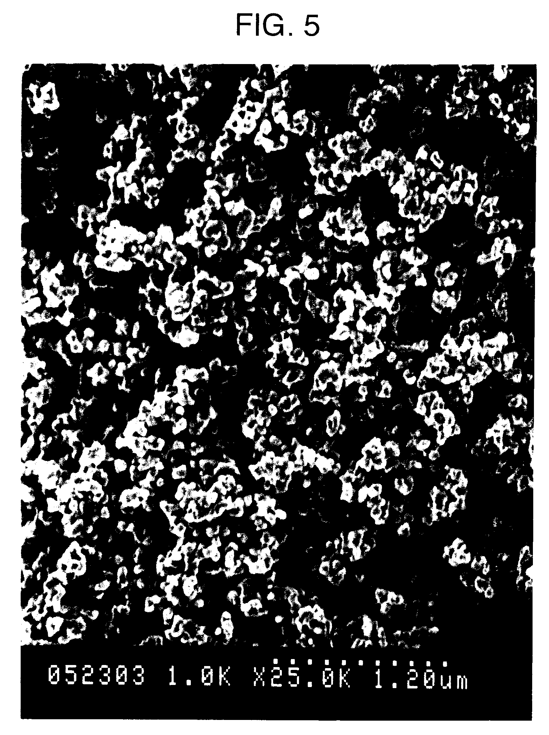

In the particulate structure, on the other hand, fine silica particles form a three-dimensional structure through contacts with one another, while maintaining the particulate shape, and thus the sizes of mutually contacting parts of fine silica particles are smaller than those of fine silica particles themselves. Thus, it seems that under a force due to, for example, compression, stress will be concentrated on the weakest contacting parts of fine silica particles, and the total strength will be lowered thereby. For example, Fig. 5 shows a typical particulate structure.

When a force to break one particle of porous silica particulate material was actually measured by applying a compression load thereto using a micro-compression tester, model MCTM-500 (commercially available from Shimadzu Corp., Japan), silica gel MB5000 (commercially available from Fuji-Silicia Chemical Co., Japan, as an example of particulate structure) having a porosity of 0.68 showed a compression breaking strength of 91 kg/cm$^2$, whereas porous silica material in the entangled columnar structure as used in the present invention showed a compression breaking strength of 128 kg/cm$^2$ at a porosity of 0.74. It is experimentally apparent that the ordinary silica gel in the particulate structure has a lower strength than that of the porous silica material in the entangled columnar structure.

Porous silica particulate material with its surface pores in an open state, like its inner pores, and without shells associated with pores in a low-open state, is preferable from a viewpoint that the transfer of adsorption-susceptible species into the particles becomes easy when the material is used as an adsorbent, for example. The shape of porous inorganic particulate material is not particularly restricted, but spherical or nearly spherical shape is preferable.

The porous inorganic particulate material has a silica content of preferably not less than 99% by weight, whereby the essentially significant chemical resistance of silica can be shown. Porous inorganic particulate material having such a silica content shows a distinguished resistance to a neutral or acidic solution particularly when the contacting solution is an agueous solution.

With such a porous inorganic particulate material, an amount of inorganic substance per unit volume of the particulate material can be increased and also the apparatus can be made more compact. Furthermore, the space ratio (pore ratio) of the porous inorganic particulate material provided with the inorganic substance therein can be made higher and thus, for example, when the porous inorganic particulate material provided with the inorganic substance is filled into a column, the column pressure can be kept lower. Still furthermore, when an inorganic substance is used as an ion exchanger, the resistance, in terms of mechanical strength, to such changes as in species or concentration of eluent to be used for adsorption and desorption, can be increased, and thereby prevents the particles from crushing and disintegrating into finer particles when filling a large-scale column, assuring stable operations in repeated separation processes.

One example of a process for producing a porous inorganic particulate material in an entangled columnar structure will be given below, and it must be understood that a process for producing such a porous inorganic particulate material is not limited thereto.

At first, water glass or silica sol is shaped into a spherical or nearly spherical form by granulation through an apparatus such as a spray drier or a vibrating granulator. Pores can be formed in the particles by adding an inorganic salt, such as sodium chloride, molybdate, and sodium phosphate to the water glass or silica sol as the raw material, and firing the inorganic salt-containing silica particles, an intermediate product, by heating to 500°C or higher, followed by desalination, whereby porous silica material having a desired pore size and a desired narrow pore size distribution can be obtained upon proper selection of conditions. Specifically, the processes are disclosed in JP-B-('91)-39730 or JP-B-6('94)-15427.

Particularly, porous inorganic particulate material having a skeleton in an entangled columnar structure, an average particle size of 1 μm to 1 mm, a porosity of 0.60 to 0.90 and an average pore size of 500 to 2,000 nm, can be produced by preparing an aqueous solution with a charge composition in which a volume ratio between salt and silica is 2/1 (porosity: 0.60) to 12/1 (porosity: 0.90), preferably using ammonium molybdenate and sodium dihydrogen phosphate (in a molar ratio of Na/Mo of 6/4 to 0.5/9.5) as inorganic salts, and granulating the aqueous solution, followed by firing at 675°C for one hour (average pore size: 500 nm) to 750°C for 4 hours (average pore size: 2,000 nm) in the above-mentioned process.

An inorganic substance to be included in the porous inorganic particulate material in the present invention is not limited to the aspect of its chemical characteristics, such as composition and molecular structure, and can be selected from inorganic substances such as metals, alloys, metal oxides, metal salts, etc. The inorganic substance for use as an inorganic ion exchanger includes, for example, aluminosilicates represented by zeolite; oxides, hydroxides and hydrous oxides represented by beryllium oxide, gallium oxide, indium oxide, iron oxide, manganese oxide, lanthanum oxide, bismuth oxide, titanium oxide, tin oxide, cerium oxide, thorium oxide, antimony oxide, alkali metal-substituted antimony, niobium oxide, tantalum oxide, tangstenic acid, molyodenic acid, zirconium hydrogen phosphate compound, etc.; acidic salts represented by zirconium phosphate, titania phosphate and hydroxyapatite; basic salts and composite hydroxides represented by hydrotalcites; heteropolyacids represented by sodium phosphomolyodate, sodium phosphotungstate, etc.; hexacyanometal salts represented by hexacyanozinc, etc.; and so on. The inorganic substance for use as an inorganic catalyst includes a noble metal system of gold, silver and copper, a platinum system of platinum, palladium, nickel, etc., oxides and hydroxides of titanium, manganese, arsenic, antimony, celium, etc., and so on. The inorganic substance for use as a hydrogen-occlusion alloy includes a metal system of niobium and vanadium, an alloy system of FeTi, MgNi, $LaNi_5$, etc., and so on.

In the present porous inorganic composite for the use of separating Li ions as a metal element, an inorganic ion exchanger is used as an inorganic substance to be included in the porous inorganic particulate material. The present invention will be described in detail below, referring to cases of using an inorganic ion exchanger as an inorganic substance.

An inorganic ion exchanger used for separating Li ions and contained in the porous inorganic composite, is not limited to its chemical characteristics such as its composition and molecular structure, and can be selected from various inorganic ion exchangers. For example, an inorganic ion exchanger having a high Li ion selective adsorbability includes metal compounds represented by the following general formula:

$$H_xA_{1-x}M_2$$

(where $0 < x < 1$, H is a hydrogen atom, A is at least one element selected from the group consisting of Li, Na and K, and M is at least one element selected from the group consisting of Zr, Ti and Sn); acid-treated products of $Li_2TiO_3$; acid-treated products of lithium-manganese oxides such as $LiMn_2O_6$, $Li_2MnO_3$, etc.; acid-treated products of mixed oxides such as $Mg_2MnO_4$ or $MgMn_2O_4$; acid-treated products of compounds comprising lithium, manganese and at least one element of the iron group; acid-treated products of lithium-titanium or antimony composite oxides represented by any one of the following general formulae:

$$Li_{2-x}H_xTiO_3 \ (0 < x < 2)$$

$$Li_{1-x}H_xSbO_3 \ (0 < x < 1);$$

heat-treated products of aluminum hydroxide, hydrous tin hydroxide, tin antimonate, bismuth phosphate and titanic acid; metal compounds represented by the following general formula:

$$H_xA_{1-x}M_2 \ (PO_4)_2$$

(where x is a positive number of less than 1, A is at least one element selected from the group consisting of Li, Na and K, and M is at least one element selected from the group consisting of Zr, Ti and Sn); monoclinic antimonic acid, monoclinic antimonic acids containing at least one alkali metal, etc.

On the other hand, Li separation can be attained by removing other metal ions which coexist with Li ions, through selective adsorption, where a porous inorganic composite containing an inorganic ion exchanger having a high selective adsorbability toward other coexisting metal ions, is used.

It is desirable, from the viewpoint of stable fixing to the porous inorganic particulate material, to use a metal oxide as an inorganic ion exchanger. The metal oxide, as herein referred to, means a compound in which a metal element and an oxygen element are combined together in some form, and includes, for example, beryllium oxide, gallium oxide, indium oxide, iron oxide, manganese oxide, lanthanum oxide, bismuth oxide, titanium oxide, tin oxide, cerium oxide, thorium oxide, antimonic acid, alkali metal-substituted antimony, niobium oxide, tantalum oxide, tungstenic acid, molyodenic acid, zirconium hydrogen phosphate compound, etc.

Two or more kinds of metal oxides may be carried on the porous inorganic particulate material, but one kind thereof is preferable. By restricting to one kind, a porous inorganic composite specialized in a specific adsorbability can be obtained.

Among the above-mentioned metal oxides, antimonic acid is particularly preferable as a single metal oxide because of its selective adsorbability to Li ions.

It is known that antimonic acid can be in an amorphous state, a glassy state, a cubic crystal system or an orthorhombic crystal system, depending on the synthesis processes, among which the cubic crystal antimonic acid is preferable, because it shows a higher selective adsorbability to Na ions rather than Li ions. The cubic crystal system can be confirmed by X-ray diffraction.

To produce the present porous inorganic composite by stably fixing the inorganic ion exchanger to the pore surfaces of the porous inorganic particulate material, it is necessary to select a process compatible with the nature of inorganic ion exchanger to be fixed. Specifically, the process can comprise, for example, dipping a porous inorganic particulate material into a solution containing a metal convertible to an inorganic ion exchanger by, for example, a nitric acid solution, a carbonic acid solution, a sulfuric acid solution, a hydrochloric acid solution, etc. or in an aqueous dispersion containing a surfactant and a metal convertible to an inorganic ion exchanger, followed by drying, for example, in a vacuum drier, or firing, for example, in an electric oven and then washing. When the porous inorganic particulate material is dipped into an excess of the aqueous dispersion containing a metal convertible to an inorganic ion exchanger, a further step of removing the excess dispersion will be required. Furthermore the dispersion tends to remain also on the surface of the porous inorganic particulate material and results in formation of particles or crusts of the inorganic ion exchanger on the surface. When the resulting inorganic composite is used for metal separation, the particles or crusts of inorganic ion exchanger will peel off from the surface of the porous inorganic particulate material due to frictions between the particulate materials, etc. and cause unpreferable cloggings or pressure loss. By making the metal-containing aqueous dispersion 80 to 99 volume % of the pore volume of the porous inorganic particulate material and contacting with the porous inorganic particulate material, the step of removing the excess dispersion can be omitted, and desirably the inorganic ion exchanger will not be deposited onto the surface of the porous inorganic particulate material. Whether only drying is subsequently required or drying and further firing in an electric oven are required depends on the species of inorganic ion exchanger.

Another process for fixing the metal oxide on the porous inorganic particulate material may comprise, for example, dipping a porous inorganic particulate material into a solution or an aqueous dispersion containing a metal compound convertible to an inorganic ion exchanger, maintaining the solution or dispersion at low temperatures, thereby depositing precipitates of the metal oxide and holding the precipitates within the porous inorganic particulate material.

For example, the cubic crystal antimonic acid for use as an inorganic ion exchanger can be prepared by aging precipitates resulting from hydrolysis of various antimony salts at low temperatures in a range of room temperature to about 90°C (which are lower than the firing temperatures in the case of fixing by firing) for a long time. For example, antimony pentachloride can be used as an antimony salt. Antimony pentachloride is dissolved (hydrolyzed) in water and a porous inorganic particulate material is dipped in the resulting aqueous solution, followed by aging while keeping the solution at temperatures ranging from room temperature to 90°C for a few days to several weeks. In case of antimonic acid, cubic crystal antimonic acid will deposit within the porous inorganic particulate material by aging. Subsequent drying may or may not be carried out. In this case, antimony pentachloride seems to be converted to antimony hydroxide in water.

For example, antimonic acid as a metal oxide can be used to remove Na ions abundantly contained as impurities in an unpurified aqueous solution containing Li ions. That is, other useful metal elements can be separated from sodium, and thus the antimonic acid is preferable for the present inorganic ion exchanger.

Another example of a metal oxide to be carried on the porous inorganic particulate material is manganese oxide.

It is known that the manganese oxide has many chemical species and crystal structures. In one example, lithium element and manganese element are mixed together at a ratio of the former to the latter of 1:0.5 to 3; the resulting mixture is fired at high temperatures, e.g. about 800°C, to synthesize spinel type $LiMn_2O_4$; and then the exchange of Li ions with H ions is conducted in e.g., 1 N nitric acid to form spinel type $HMn_2O_4$. The resulting spinel type manganese oxide shows a selectivity specific for Li ions, and is called $\lambda$ type manganese dioxide. The $\lambda$ type manganese dioxide can selectively adsorb and separate lithium ions from various impurity elements as an inorganic ion exchanger and thus serves preferably for purification.

The $\lambda$ type manganese dioxide as an inorganic ion exchanger can be stably fixed to the porous inorganic particulate material as a carrier by dipping the latter into a manganese nitrate solution, followed by drying and firing.

Firing conditions depend on the species of inorganic ion exchangers, but generally the firing temperature is 500° to 1,000°C and the firing time is 2 to 30 hours. Firing conditions for $\lambda$ type manganese dioxide are preferably at about 800°C for 10 to 20 hours.

The subsequent washing step is carried out to remove impurities, etc. formed during the fixing treatment. Washing is carried out mainly with water at ordinary temperatures, and an acidic solution such as dilute hydrochloric acid can be used for washing, if required. In the case of $\lambda$ type manganese dioxide, it is desirable to treat the porous inorganic composite with a mineral acid such as nitric acid, hydrochloric acid, etc. first and then wash the composite with water to exchange coexisting lithium ions with protons.

To recover the desired metal element from the solution containing metal elements using the present porous inorganic composite, two methods are available, depending on the nature of the desired metal element and that of inorganic ion exchanger.

One method is to have the inorganic ion exchanger specifically adsorb impurity metal elements rather than the desired metal element. For example, the desired metal element is lithium and the inorganic ion exchanger is cubic crystal antimonic acid having an adsorbability specific for sodium. Lithium is contained abundantly in brine, but there is much sodium in the brine, wherein most of the impurity metal elements is sodium. Then, the porous inorganic composite is brought into contact with a solution containing both lithium and sodium, and sodium is preferentially adsorbed onto the inorganic ion exchanger because lithium has a low selectivity coefficient. Most of lithium remains in the solution under appropriate conditions. Then, the solution is separated from the porous inorganic composite by some means, and the desired lithium can be recovered from the solution upon necessary post-treatments. In this case, a process for eluting the desired metal element from a column in the separation process can be omitted, enabling a continuous process.

Another method is to specifically adsorb a desired metal element onto an inorganic ion exchanger. As one example, when the desired metal element is lithium and the inorganic ion exchanger is $\lambda$ type manganese dioxide, the desired metal element is selectively adsorbed onto the inorganic ion exchanger by bringing the porous inorganic composite into contact with a solution containing metal elements, while other unnecessary elements remain in the solution under appropriate conditions without any adsorption onto the inorganic ion exchanger because those unnecessary elements have a low selectivity coefficient. The porous inorganic composite is separated from the solution by some means and brought into contact with an eluent to recover the desired metal element. Even in case that the desired metal element is other metal elements than lithium, the same method can be applied. In this method, the separation process requires adsorption and desorption of the desired metal element and thus must be carried out batchwise.

In any one of the foregoing methods, substantially all of metal elements can be adsorbed onto the inorganic ion exchanger, using an excess of inorganic ion exchanger and then the desired metal element can be eluted by an appropriate eluent.

As the eluent, an aqueous nitric acid solution at a relative high concentration such as about 0.1 to about 2 mmol can be used for lithium elution and an aqueous nitric acid solution at a relative low concentration such as about 0.001 to 0.5 mmol or an aqueous neutral salt solution of ammonium sulfate, etc. can be used for sodium elution.

The present porous inorganic composite can be used in a mode such as filling the porous inorganic composite into a column and passing a solution containing metal elements therethrough or forming a fluidized bed of a porous inorganic composite by passing a solution containing metal elements counter-currentwise in a column filled with the porous inorganic composite. Such a mode of charging the porous inorganic composite into a tank containing a solution with metal elements and then separating and removing the porous inorganic composite therefrom may be used.

The present invention will be described in more detail below, referring to Examples and Comparative Examples.

Determination of various physical properties was carried out in the following manner:

(1) Average particle size

Particle sizes were visually measured upon 20-200-fold enlargement of microscopic picture.

(2) Porosity $\alpha$

Bulk density d (g/ml) of porous inorganic particulate material was measured with a densitometer (Multivolume densitometer 1305, tradename of a product commercially available from Micromeritics Co.) using a helium gas as a pore-ingoing substance. Pore volume per unit weight $\phi$ (ml/g) was measured with a mercury porosimeter (Pascal-240, tradename of a product commercially available from CE-Instrument Co.).

From these values, a porosity $\alpha$ was calculated by the following equation:

$$\alpha = d\phi/(1 + d\phi)$$

(3) Average pore size

Measured by a mercury penetration method using a mercury porosimeter (Pascal-240, tradename of a product commercially available from CE-Instrument Co.) under a measuring pressure ranging from 0.1 to 200 MPa for a measurable pore radius of 3.7 to 7,500 nm.

(4) Skeleton structure

Skeleton structure of porous inorganic particulate material involves an entangled columnar structure and a particulate structure. The skeleton structure can be determined by a scanning electron microscope. In the present invention, observation was made by a scanning electron microscope S-800 (a product commercially available from Hitachi Ltd.). A typical example of the entangled columnar structure is shown in Fig. 4 and that of the particulate structure in Fig. 5.

(5) Composition of porous inorganic particulate material

Composition of porous inorganic particulate material was analysed by an ICP (inductivity coupled plasma) emission spectrometer Model IRIS-AP (commercially available from Thermogyrelash Co.)

(6) Selectivity coefficient K

Five (5) kinds of 100 ml of aqueous solutions containing Li ion and Na ion, each at the concentrations of 0.01, 0.02, 0.04, 0.10 and 0.20 mol/$\ell$, respectively, were prepared, using lithium chloride and sodium chloride. Five (5.0) grams of porous inorganic composite was added to each of these aqueous solutions and subjected to adsorption at 25°C for 3 hours with stirring. Then, 1 ml each of the supernatants was sampled from the respective aqueous solutions and increased in volume by 200-fold by adding pure water thereto, and their Li ion concentrations and Na ion concentrations were measured by a flame spectro-photometer (Model 1100, commercially available from Varian Techtron Co.). Selectivity coefficient K was calculated from the resulting values by the following equation:

$$K = ([B_2]^a[A_1]^b)/([A_2]^b[B_1]^\ell)$$

(wherein [A$_2$] and [B$_2$] are concentrations of ion A and ion B in the adsorption layer, respectively, and [A$_1$] and [B$_1$] are concentrations of ion A and ion B in solution, respectively, and a and b are valencies of ion A and ion B, respectively).

In Examples, a selectivity coefficient of lithium ions to sodium ions was calculated.

(7) Pressure change test with changing column flow rate

Porous inorganic composite was filled into a pressure-resistant glass column of 10 mm in diameter, to a level of 10 cm from the bottom, and 600 ml of an aqueous 1 mole/$\ell$ hydrochloric acid solution was passed downwards therethrough for conditioning, followed by washing with deionized water. Then, the deionized water was passed through the column at a constant flow rate to measure a pressure at the column inlet as observed. Four measurements were carried out while changing the flow rate. Measurement temperature was set to 25°C.

Preparation Example 1

Preparation example of porous inorganic particulate material will be given below.

Into a 500-ml beaker, 52.19 g of pure water was placed and 3.12 g of nitric acid (special grade, commercially available from Wako Pure Chemical Co.) was added thereto with stirring, followed by addition of 19.53 g of an aqueous silica sol solution (tradename: Snowtex N-30 commercially available from Nissan Chemical Industries, Ltd.) thereto. Furthermore, 8.35 g of sodium dihydrogen phosphate (industrial grade, commercially available from Taihei Kagaku Kogyo K.K.), 3.12 g of ammonium molybdate (industrial grade, commercially available from Nihon Muki Kagaku Kogyo K.K.) and 0.025 g of sodium laurylsulfate (first grade, commercially available from Wako Pure Chemical Co.) were added thereto with stirring to make a homogeneous dispersion.

Preparation of particles having a uniform particle size was conducted by the method described in JP-A-59-95925.

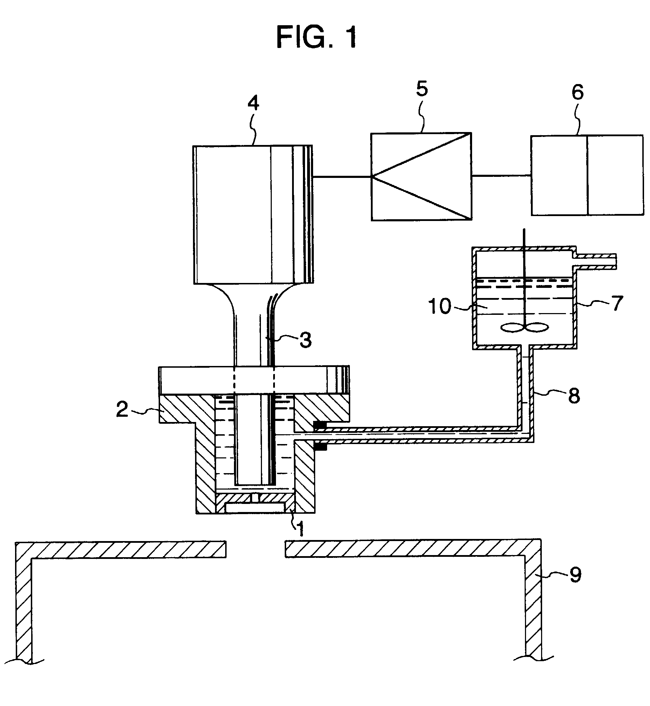

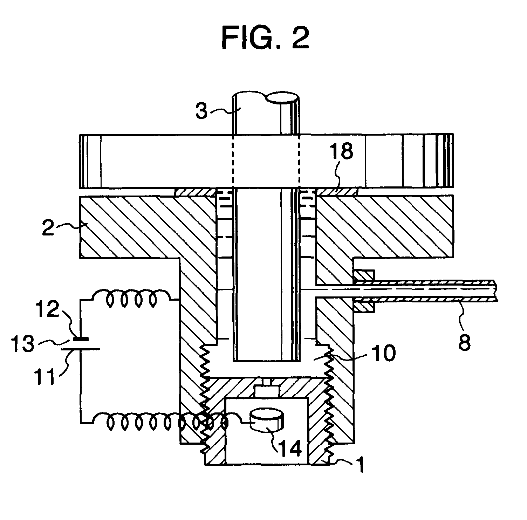

Specific granulating apparatus and conditions are as follows. Outline of the granulating apparatus is given in Figs. 1 and 2.

A dispersion vessel 2 with 5-cm inner diameter, to the bottom of which was set a nozzle 1 having 10 perforations with 0.01-mm to 0.5-mm diameter and 0.5-mm to 10-mm thickness was fixed to a vibrator 3 having a piezo oscillator 4 (natural oscillation frequency: 38 KHz) through flanges. The vibrator (oscillator connection rod) 3 was connected to a frequency generator 6 (wave form and frequency being variable between 0.01 and 1,000 KHz) through an amplifier 5, whereby the output and oscillation frequency of vibrator 3 could be adjusted as desired. The bottom area of a portion facing nozzle 1 of vibrator 3 was about 5 $cm^2$, and the distance between vibrator 3 and perforations of nozzle 1 could be readily adjusted by a screw provided on the outer periphery of nozzle 1 and the inside surface of dispersion vessel 2. As shown in Figs. 1 and 2, a steel ring 14 with 12-mm inner diameter and 10-mm length, was provided at the position where the dispersion columns from the perforations of nozzle are to be split so that the ring may not contact the nozzle or the vessel, and connected to an electrode 11 with the plus potential of a DC power source 13 (variable in a range of 0 V to 1,000 V) through a wiring. Electrode 12 with minus potential was connected to one end of dispersion vessel 2 through wiring, whereas the dispersion vessel 2 was earthed. In Figs. 1 and 2, numeral 7 refers to a dispersion storage tank, 8 to a dispersion conduit pipe, 9 to a drier and 10 to a dispersion. Detail of the apparatus is disclosed in the above-mentioned JP-A-59-95925.

Conditions for preparing porous silica particulate material were as follows: thickness of perforations: 1 mm; distance between perforations and vibrator: 1.0 mm; diameter of each perforation: 0.053 mm; flow rate through perforations: 9,120 mm/sec; oscillation frequency: 38 KHz; and DC voltage: 1,000 V.

Liquid droplets outgoing from the nozzle perforations were allowed to fall into hot air drier at 160°C, dried and granulated, whereby silica particles were obtained.

Then, the silica particles were placed into an electric oven, heated to 680°C at a temperature elevation rate of 180°C/hour and further to 720°C over 30 minutes and then kept at 720°C for one hour.

Then, the cooled particles were washed with hot water at 70°C and dried again to obtain porous silica particulate material with an average particle size of 43 µm, a porosity of 0.68, an average pore size of 620 nm, a skeleton in an entangled columnar structure and a silicon dioxide content of 99.5% by weight.

Preparation Example 2

One hundred (100.0) grams of Snowtex N-30 (an aqueous silica sol solution, commercially available from Nissan Chemical Industries, Ltd.), 15.8 g of nitric acid (special grade, commercially available from Wako Pure Chemical Co.), 43.2 g of sodium dihydrogen phosphate (industrial grade, commercially available from Taihei Kagaku K.K.) and 85.6 g of ammonium molybdate (industrial grade, commercially available from Nihon Muki Kagaku Kogyo K.K.) were added to 151.8 g of pure water to make a homogeneous solution. Then, the solution was admixed with 15.2 g of an aqueous 25% ammonia solution (special grade, commercially available from Wako Pure Chemical Co.) to make pH 7.3. The mixture solution turned white turbid and viscous, and thus was further admixed with 188.0 g of pure water to prepare an aqueous, heterogeneously mixed solution with suppressed viscosity. This aqueous mixed solution was introduced with stirring into a spray drier (tradename: Model OC-16, commercially available from Ohkawara Kakoki K.K.) and subjected to granulation. Rotating disc for liquid droplet formation of 8 cm in diameter was used at 2,100 rpm. Drier operating conditions were as follows: drier inlet temperature: 230°C; hot air flow rate: 310 $Nm^3$/hour; and mixture solution feed rate: 90 L/hour. The resulting granulates were fired in an electric oven at 350°C for 2 hours and then at 750°C for one hour, and then washed with hot water at 70°C and then with excess water, followed by classification through a 400-mesh (aperture size: 37 µm) sieve and a 200-mesh (aperture size: 74 µm) sieve and drying at 70°C under reduced pressure. The resulting spherical porous inorganic material had an average pore size of 705 nm, a porosity of 0.74, a silica content of 99.5% by weight and an entangled columnar structure.

Example 1

An example of porous inorganic composite using cubic crystal antimonic acid will be given below.

An antimony solution was prepared by mixing 0.1 ℓ of antimony pentachloride (chemical grade, commercially available from Wako pure Chemical Co.) and 0.1 ℓ of deionized water. The antimony solution and 150 g of the porous silica particulate material which was prepared in Preparation Example 1 were charged into a separable flask containing 5 ℓ of deionized water, and stirred for 5 days, while keeping the temperature of the flask at 80°C, whereby precipitates were obtained. The precipitates were washed with hydrochloric acid until the washing solution was no more colored, whereby a porous inorganic composite containing cubic crystal antimonic acid was obtained.

Then, the porous inorganic composite was filled into a pressure-resistant glass column of 10 mm in diameter to a level of 30 cm from the bottom, and 600 ml of an aqueous 1 mol/$\ell$ hydrochloric acid solution was passed downwards therethrough for conditioning. Then, 300 ml of an aqueous solution containing 100 mmol/$\ell$ of lithium chloride (special grade, commercially available from Wako Pure Chemical Co.), 100 mmol/$\ell$ of sodium chloride (special grade, commercially available from Wako Pure Chemical Co.) and 10 mmol/$\ell$ of nitric acid (special grade, commercially available from Wako Pure Chemical Co.) were passed through the column for adsorption onto the porous inorganic composite.

Then, elution of the ions adsorbed on the porous inorganic composite was carried out with 40 ml of an aqueous 1 mol/$\ell$ nitric acid solution at a test temperature of 25°C. Elution results showed that 2.201 mmoles of sodium ions and 0.031 mmoles of lithium ions were eluted. That is, sodium ions could be separated from lithium ions present in the solution by selective adsorption of sodium ions onto the porous inorganic composite.

Example 2

The porous inorganic composite synthesized in Example 1 was filled in a pressure-resistant glass column of 10 mm in diameter to a level of 30 cm from the bottom, and 600 ml of an aqueous 1 mol/$\ell$ hydrochloric acid solution was passed downwards therethrough for conditioning. Then, 300 ml of an aqueous solution containing 100 mmol/$\ell$ lithium chloride (special grade, commercially available from Wako Pure Chemical Co.) and 100 mmol/$\ell$ of sodium chloride (special grade, commercially available from Wako Pure Chemical Co.) were passed therethrough for adsorption onto the porous inorganic composite.

Then, elution of lithium ions was carried out with 30 ml of an aqueous 0.01 mol/$\ell$ nitric acid solution and then elution of sodium ions was carried out with 40 ml of an aqueous 1 mol/$\ell$ nitric acid solution, each at a test temperature of 25°C. Elution results showed that 0.02 mmoles of sodium ions and 0.806 mmoles of lithium ions were eluted by the first elution, and 2.03 mmoles of sodium ions and 0.011 mmoles of lithium ions were eluted by the second elution, where the eluent flow rate was 0.15 $\ell$/h with the pressure of 0.8 MPa.

Comparative Example 1

An example of an inorganic ion exchanger using cubic crystal antimonic acid without any carrier will be given below.

An antimony solution was prepared by mixing 0.1 $\ell$ of antimony pentachloride and 0.1 $\ell$ of deionized water. The antimony solution was discharged into a separable flask containing 5 $\ell$ of deionized water, stirred for 20 days, while keeping the temperature of the flask at 30°C, thereby obtaining precipitates. The precipitates were washed with hydrochloric acid until the washing solution was no more colored, whereby an inorganic ion exchanger was obtained.

The inorganic ion exchanger was subjected to a pressure-changing test while changing the column flow rate, but the solution could not be passed through the column because of too high pressure.

Example 3

An example of preparing a $\lambda$-manganese dioxide type porous inorganic composite will be given below.

Lithium carbonate (special grade, commercially available from Wako Pure chemical Co.) and manganese carbonate (special grade, commercially available from Wako Pure Chemical Co.) were mixed together at a molar ratio of the former to the latter of 1:2 (LiSO$_3$: 14.77 g; MnCO$_3$: 91.96 g), and the resulting mixture was put into an aqueous 6.54 mol/$\ell$ nitric acid solution (200 ml) to dissipate carbonate and change the counter ions of metal ions to nitrate ions. Into the dark brown solution, 207 g of porous silica particulate material obtained in Example 1 was dipped and then dried in a vacuum drier for 12 hours. The same operation as above repeated once more to obtain the same amount of the porous silica particulate material. Then, the resulting products were joined together and fired in a barrel type, electric heater oven at 750°C for 12 hours. Temperature elevation time was 3 hours and cooling was carried out by oven cooling. Then, the fired product was dipped into an aqueous 1 mol/$\ell$ hydrochloric acid solution for 3 days to obtain a porous inorganic composite having an ion exchangeability. The composite was thoroughly washed with deionized water and dried, and then classified into 37-74 $\mu$m sizes through 200 to 400-mesh sieves and used. The porous inorganic composite had a Li selectivity coefficient of 48 and a Li ion adsorbability of 5.8 mg/g, which was higher than the Li ion adsorbability of $\lambda$-manganese dioxide alone in the following Comparative Example 2, i.e. 4.4 mg/g. The column filled with the porous inorganic composite of this Example had a lithium ion adsorbability corresponding to 4.9 mg/ml column, when the space fraction other than that of the composite particles was presumed to be 0.4.

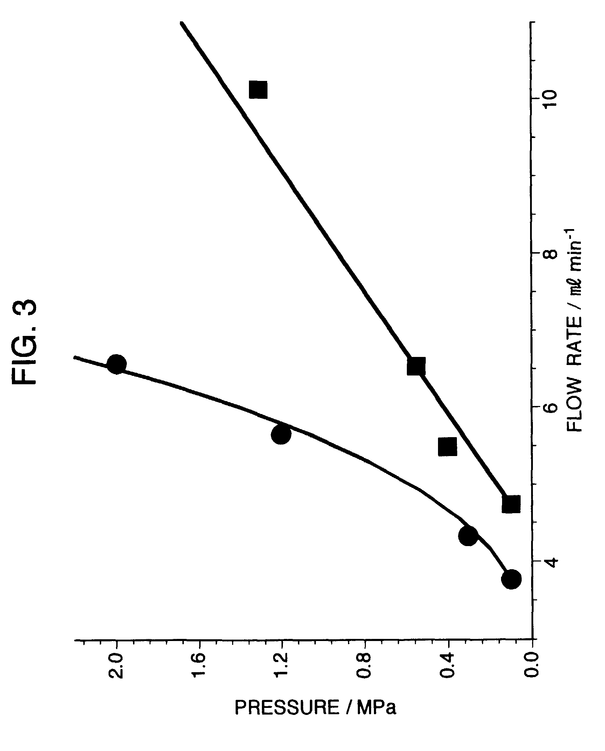

The porous inorganic composite was filled into a pressure-resistant glass column of 10 mm in diameter, to a level of 10 cm from the bottom, and 600 ml of an aqueous 1 mol/$\ell$ hydrochloric acid solution was passed downwards therethrough for conditioning. Pressure observed in the pressure change test while changing the column flow rate was 0.098 MPa at a column flow rate of 4.73 ml/min, 0.402 MPa at 5.51 ml/min, 0.548 MPa at 6.54 ml/min and 1.327 MPa at 10.12 ml/min. The results are shown in Fig. 3 by black square marks ■.

Then, 300 ml of an aqueous mixed solution containing 100 mmol/$\ell$ each of lithium hydroxide and sodium hydroxide and 0.1 mol/$\ell$ of ammonium sulfate were passed through the column for adsorption onto the porous inorganic composite. Then, the ions adsorbed on the porous inorganic composite were eluted with 120 ml of an aqueous 0.1 mol/$\ell$ nitric acid solution. As a result, 0.81 mmoles of lithium ions and 0.02 mmoles of sodium ions were eluted at a test temperature of 25°C.

Example 4

Lithium carbonate (special grade, commercially available from Wako Pure Chemical Co.) and manganese carbonate (special grade, commercially available from Wako Pure Chemical Co.) were mixed together in a molar ratio of the former to the latter of 1:2 (LiCO$_3$: 14.77 g; MnCO$_3$: 91.96 g) and the resulting mixture was put into an aqueous 6.54 mol/$\ell$ nitric acid solution (150 ml) to dissipate the carbonate and change the counter ion of metal ions to nitrate ions. Into the dark brown solution, 116 g of porous silica particulate material obtained in Example 2 was dipped and then dried in a vacuum drier for 12 hours. The same operation as above was repeated four times, and the resulting products were joined together and fired in a barrel type, electric heater oven at 750°C for 12 hours. Temperature elevation time was 3 hours and cooling was carried out by oven cooling. Then, the fired composite was dipped into an aqueous 1 mol/$\ell$ hydrochloric acid solution for 3 days to obtain a porous inorganic composite having an ion exchangeability. The composite was thoroughly washed with deionized water and dried, and then classified into 37-74 μm sizes through 200 to 400-mesh sieves and used. The porous inorganic composite had a Li selectivity coefficient of 45 and a Li ion adsorbability of 8.5 mg/g. The column filled with the porous inorganic composite of this Example had a Li ion adsorbability corresponding to 15.1 mg/ml column, when the space fraction other than that of the composite particles was presumed to be 0.4.

Example 5

The porous inorganic composite synthesized in Example 3 was filled into a pressure-resistant glass column of 10 mm in diameter to a level of 10 cm from the bottom, using water, and 600 ml of an aqueous 1 mol/$\ell$ hydrochloric acid solution was passed downwards therethrough for conditioning. Then, 300 ml of an aqueous mixed solution containing 100 mmol/$\ell$ each of lithium hydroxide and sodium hydroxide were prepared and passed through the column for adsorption onto the porous inorganic composite. Then, the adsorbed sodium ions were eluted with 360 ml of an aqueous 0.1 mol/$\ell$ ammonium sulfate solution (first elution) and the adsorbed lithium ions were eluted with 120 ml of an aqueous 0.1 mol/$\ell$ nitric acid solution (second elution). The elution results showed that 0.50 mmoles of sodium ions and 0.18 mmoles of lithium ions were eluted by the first elution and 0.74 mmoles of lithium ions and 0.05 mmoles of sodium ions were eluted by the second elution, each at a test temperature of 25°C.

Example 6

A porous inorganic composite was prepared in the same manner as in Example 3. The composite was filled into a pressure-resistant glass column of 3 cm in diameter to a level of 10 cm from the bottom, and 600 ml of an aqueous 1 mol/$\ell$ hydrochloric acid solution was passed downwards therethrough for conditioning, followed by thoroughly washing with deionized water.
Then, 300 ml of an aqueous solution containing 100 mmol/$\ell$ each of lithium chloride and sodium chloride were prepared and passed through the column to adsorb the metal elements onto the porous inorganic composite.
Then, elution of the adsorbed sodium ions was carried out with 400 ml of an aqueous 1 mol/$\ell$ ammonium sulfate solution (first elution) and elution of the adsorbed lithium ions was carried out with 400 ml of an aqueous 0.1 mol/$\ell$ nitric acid solution (second elution), each at a test temperature of 25°C. The elution results showed that 17.71 mmoles of sodium ions and 5.94 mmoles of lithium ions were eluted by the first elution and 6.54 mmoles of sodium ions and 18.56 mmoles of lithium ions were eluted by the second elution.

Comparative Example 2

An example of using an ion exchanger of λ-manganese dioxide alone without any carrier will be given below.
Lithium carbonate and manganese carbonate were mixed together in a molar ratio of the former to the latter of 1:2 (LiCO$_3$: 14.77 g; MnCO$_3$: 91.96 g) and the carbonate was dissipated therefrom with an aqueous 6.54 mol/$\ell$ nitric acid solution (200 ml) to change the counter ions of metal ions to nitrate ions. The resulting dark brown solution was stirred while warming on a hot stirrer to evaporate the solution moiety.
Then, the residues were fired in a barrel type, electric heater oven at 810°C for 21 hours with a temperature elevation time of 3 hours and cooling by oven cooling, whereby LiMn$_2$O$_4$ was obtained. Then, the product was dipped into an aqueous 1 mol/$\ell$ nitric acid solution for 3 days to remove lithium therefrom and prepare a lithium-rid off shell. Gamma (λ)-manganese dioxide serving to be an ion sieve type adsorbent was prepared thereby. The product was thoroughly washed with deionized water, dried and well mixed in a mortar to make an inorganic ion exchange having a Li selectivity coefficient of 43.

The inorganic ion exchanger was subjected to a pressure change test while changing a column flow rate, and it was found that the pressure was 0.102 MPa at a column flow rate of 3.75 ml/min, 0.31 MP at 4.35 ml/min, 1.21 MPa at 5.63 ml/min and 1.961 MPa at 6.52 ml/min. The results are shown in Fig. 3 by black circles ●.

INDUSTRIAL APPLICABILITY

The present porous inorganic composite is distinguished functional particles capable of maintaining functions of an inorganic substance contained therein with a high efficiency, a high strength and less crushing or less disintegration of the particles into finer particles.

The porous inorganic composite containing an inorganic ion exchanger as an inorganic substance has not only a high capacity for adsorbing metal element, but also a capability of performing stable separations of the same. In the case of lithium recovery using cubic crystal antimonic acid as an inorganic ion exchanger, sodium can be selectively adsorbed, and the process can be carried out continuously. Furthermore, the present porous inorganic composite can contain a larger amount of inorganic ion exchanger therein and thereby enables an efficient separation, adsorption, etc. At the same time, it can also have a larger pore volume and enable to keep the operating pressure of separation column lower. Still furthermore, since it is possible to obtain relatively uniform particle forms, the mechanical strength of the particles is quite high in spite of their relatively large pore sizes and the particles are less crushable, thus enabling an easy handling and preventing the column pressure from increasing during the use.

The present porous inorganic composite has a substantially high exchange capacity, as compared with the use of a conventional inorganic ion exchanger alone, and has much distinguished adsorption characteristics, adsorption capacity and practicality, such as distinguished mechanical strength, low crushability during the use and relatively uniform particle sizes despite the incorporation of the small amount of the ion exchanger. Still furthermore, the present porous inorganic composite has a higher strength, despite its higher porosity, than those using commercially available silica gel or porous glass as a carrier, because the skeleton of the current composite is in an entangled columnar structure. Thus, the present porous inorganic composite can be used as a stationary phase for gas chromatography and liquid chromatography, a stationary phase for preparative chromatography, catalysts or their carriers, cell culture carriers, adsorbents, and so forth.

**Claims**

1. A porous inorganic composite which comprises a porous inorganic particulate material having an average particle size of 1 μm to 1 mm, a porosity of 0.20 to 0.90 and an average pore size of 10 to 5,000 nm, and an inorganic substance carried on the particulate material.

2. A porous inorganic composite which comprises a porous inorganic particulate material having a skeleton in an entangled columnar structure, an average particle size of 1 μm to 1 mm, a porosity of 0.60 to 0.90 and an average pore size of 500 to 2,000 nm, and an inorganic substance carried on the particulate material.

3. A porous inorganic composite according to Claim 1 or 2, wherein the inorganic substance is a metal oxide.

4. A porous inorganic composite according to Claim 3, wherein the metal oxide is antimony oxide.

5. A porous inorganic composite according to Claim 3, wherein the metal oxide is manganese oxide.

6. A method for separating a metal element which comprises contacting a solution containing a plurality of metal elements with a solid adsorbent, thereby adsorbing at least a portion of other metal elements than one element onto the solid adsorbent, and separating at least a portion of the other metal elements than the one metal element from the solution, wherein the porous inorganic composite according to any one of Claims 1 to 4 is used as the solid adsorbent.

7. A method for separating a metal element which comprises contacting a solution containing a metal element with a solid adsorbent, thereby adsorbing the metal element onto the solid adsorbent and separating the metal element from the solution, wherein the porous inorganic composite according to anyone of Claims 1 to 3 and 5 is used as the solid adsorbent.

8. A method for separating a metal element according to Claim 6 or 7, wherein the metal element is lithium.

# FIG. 1

# FIG. 2

FIG. 3

## FIG. 4

071103 20KV X10.0K 3.0um

## FIG. 5

052303 1.0K X25.0K 1.20um

| | INTERNATIONAL SEARCH REPORT | International application No. |
|---|---|---|
| | | PCT/JP97/03719 |

A. CLASSIFICATION OF SUBJECT MATTER
    Int.Cl$^6$   C01B33/12, B01J20/02, 35/10, G01N30/48, C04B38/00, 41/85

According to International Patent Classification (IPC) or to both national classification and IPC

B. FIELDS SEARCHED

Minimum documentation searched (classification system followed by classification symbols)
    Int.Cl$^6$   C01B33/12, B01J20/00, 35/00, G01N30/48, C04B38/00, 41/85

Documentation searched other than minimum documentation to the extent that such documents are included in the fields searched
    Jitsuyo Shinan Koho            1926 - 1997      Toroku Jitsuyo Shinan Koho      1994 - 1997
    Kokai Jitsuyo Shinan Koho      1971 - 1997

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 6-26662, B   (Director General, Agency of Industrial Science and Technology), April 13, 1994 (13. 04. 94), Page 1 ; page 2, right column ; Examples    (Family: none) | 1 - 8 <br><br> 1, 3 - 8 |
| Y | JP, 58-104017, A   (Fuji Photo Film Co., Ltd.), June 21, 1983 (21. 06. 83), Claims ; page 4, lower column ; Example 4   (Family: none) | 1 - 8 |
| Y | JP, 6-15427, B   (Asahi Chemical Industry Co., Ltd.), March 2, 1994 (02. 03. 94), Claims 1, 2, 3 ; "Effect of The Invention"   (Family: none) | |
| Y | JP, 8-26716, A   (Showa Denko K.K.), January 30, 1996 (30. 01. 96), "Industrial Field of Invention" ; Examples   (Family: none) | 1 - 8 |

☐ Further documents are listed in the continuation of Box C.      ☐ See patent family annex.

| * | Special categories of cited documents: | "T" | later document published after the international filing date or priority |
|---|---|---|---|
| "A" | document defining the general state of the art which is not considered to be of particular relevance | | date and not in conflict with the application but cited to understand the principle or theory underlying the invention |
| "E" | earlier document but published on or after the international filing date | "X" | document of particular relevance; the claimed invention cannot be |
| "L" | document which may throw doubts on priority claim(s) or which is cited to establish the publication date of another citation or other special reason (as specified) | | considered novel or cannot be considered to involve an inventive step when the document is taken alone |
| "O" | document referring to an oral disclosure, use, exhibition or other means | "Y" | document of particular relevance; the claimed invention cannot be considered to involve an inventive step when the document is combined with one or more other such documents, such combination |
| "P" | document published prior to the international filing date but later than the priority date claimed | | being obvious to a person skilled in the art |
| | | "&" | document member of the same patent family |

| Date of the actual completion of the international search | Date of mailing of the international search report |
|---|---|
| January 13, 1998 (13. 01. 98) | January 27, 1998 (27. 01. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)